# EUROPÄISCHE PATENTSCHRIFT

(11) **EP 1 084 874 B1**
(45) Veröffentlichungstag und Bekanntmachung des Hinweises auf die Patenterteilung: **25.01.2006**
(21) Anmeldenummer: 00119214.5
(22) Anmeldetag: 06.09.2000
(51) Int. Cl.: B60H 1/14, B60H 1/32

(54) **Zusatzheizung für ein Kraftfahrzeug**
Additional heating for a vehicle
Chauffage supplémentaire pour un véhicule

(30) Priorität: 15.09.1999 DE 19944101; 16.08.2000 DE 10040637
(43) Veröffentlichungstag der Anmeldung: 21.03.2001
(73) Patentinhaber: SIEMENS AKTIENGESELLSCHAFT, 80333 München (DE)
(72) Erfinder: Bluhm, Klaus, 61449 Steinbach (DE)

(56) Entgegenhaltungen:
- EP-A- 0 800 940
- US-A- 3 945 219
- US-A- 5 226 294
- US-A- 5 549 153

## Beschreibung

Die Erfindung betrifft eine Zusatzheizung für ein Kraftfahrzeug.

Es ist bekannt, Heizungen in Kraftfahrzeugen durch Nutzung der vom Verbrennungsmotor abgegebenen Wärme zu realisieren. Die neue Generation direkt einspritzender Verbrennungsmotoren hat aber einen deutlich verbesserten Motorwirkungsgrad, so daß die von diesen Motoren erbrachte Wärmemenge für eine komfortable Innenraumbeheizung nicht mehr in allen Betriebszuständen ausreicht. Insbesondere nach einem Kaltstart stört der sehr lange Zeitraum, bis von dem Verbrennungsmotor eine ausreichende Heizleistung erbracht wird.

Darüber hinaus ist es bekannt, Zusatzheizungen durch Zuschalten von elektrischen Heizelementen, wie beispielsweise Heizstäben, zu realisieren.

Aus der EP 0 800 940 A2 ist eine Fahrzeugklimaanlage für elektrische Autos bekannt, bei welcher ein im kältemittelführenden Kältekreislauf angetriebener Verdichter von dem Elektromotor des Kraftfahrzeuges angetrieben wird. Der Verdichter weist eine Umschalteinrichtung zur Umschaltung des Kältekreislaufes auf den Heizungskreislauf und zurück auf. Der Heizungskreislauf ist dabei so gestaltet, daß das umfließende Kältemittel die von Leistungsbauelementen der den Elektromotor ansteuernden Leistungselektronik aufgenommenen Verlustwärme an den Fahrzeuginnenraum abgibt.

Der Erfindung liegt die Aufgabe zugrunde, eine Zusatzheizung eines Kraftfahrzeuges anzugeben, welche einfach zu realisieren ist und trotzdem eine schnelle und zuverlässige Heizmöglichkeit für das Kraftfahrzeug darstellt.

Das mit der Verlustwärme beaufschlagte Kühlmittel wird zum Verdampfer geführt, welcher die vorbeiströmende Luft aufheizt, die in den Fahrzeuginnenraum geleitet wird. Im Zuge des Einsatzes höherer Bordnetzspannungen im Kraftfahrzeug werden Klimakompressoren, die durch Elektromotoren angetrieben werden und mit einer Ansteuerelektronik versehen sind, schon in naher Zukunft zum Standard im Fahrzeug gehören. Als einzige bauliche Maßnahme muss dafür Sorge getragen werden, dass der Ausgang des Kompressors zum Verdampfer umgeleitet wird.

In einer Weiterbildung der Erfindung sind der Elektromotor und der Verdichter in dem die Leistungselektronik tragenden Gehäuse angeordnet, wobei das aus dem Verdampfer austretende Kältemittel vor Eintritt in den Verdichter den Elektromotor und/oder zumindest die Leistungsbauelemente der Motorsteuerelektronik umströmt. Dies hat den Vorteil Elektromotor von dem zwangsumgewälzten Kältemittel gekühlt wird.

In einer Ausgestaltung ist der Elektromotor von dem Kältemittel allseitig umflossen. Insbesondere wenn der Elektromotor im Inneren eines von der Kältemittel aufnehmenden Behälters angeordnet ist, läßt sich die zwischen dem Elektromotor und dem Kältemittel erreichbare Wärmeaustauschfläche erheblich vergrößern, wobei von dem Elektromotor die entstehende Wärme unmittelbar über sein Gehäuse an das Kältemittel abgegeben werden kann. Zugleich wirkt das den Elektromotor umgebende Kältemittel als Schalldämpfer, so daß die nach außen dringenden Geräusche deutlich reduziert werden.

Vorteilhafterweise sind mindestens die Leistungsbauelemente der Leistungselektronik in einem engen thermischen Kontakt zum Kältemittel angeordnet.

So sind die Leistungsbauelemente mittels einer von dem Kältemittel benetzten Wärmeaustauschfläche kühlbar ausgeführt. Eine Erwärmung der Leistungselektronik auf einen unzulässig hohen Wert und eine damit verbundene mögliche Beschädigung der Elektronik wird verhindert, indem bei Erreichung der Grenztemperaturen von Motor und Elektronik eine Kühlung dieser Komponenten durch das Kühlmittel erfolgt. Dadurch lassen sich auch leistungsstarke Elektromotoren mit hoher Wärmeentwicklung einsetzen.

Bei einer besonders vorteilhaften Weiterbildung der Erfindung ist die Wärmeaustauschfläche als Teil des Elektromotors ausgeführt Die Wärmeaustauschfläche besteht dabei aus einer Vielzahl von Kanälen, die vom Kältemittel durchflossen sind, wodurch die für den Wärmeaustausch wirksame Oberfläche vergrößert wird. Hierdurch läßt sich die Wärme unmittelbar im Bereich ihrer Entstehung am Elektromotor mittels des Kältemittels abführen. Die Anströmung der Wärmeaustauschfläche gewährleistet eine nahezu vollständige Benetzung, wobei insbesondere die Ausbildung von Ruhezonen oder Bereichen verminderter Strömungsgeschwindigkeit vermieden und der Wärmeübergang verbessert werden kann. Dadurch läßt sich eine weitere verbesserte Wärmeabfuhr erreichen und der Wirkungsgrad zugleich steigern.

In einer Ausgestaltung ist die die Leitungsbauelemente beinhaltende Leistungselektronik auf einem Dickschichtkeramiksubstrat angeordnet, welches auf der Oberfläche des Behälters mittels eines Wärmeleitklebers aufgeklebt ist.

Alternativ dazu ist die die Leitungsbauelemente beinhaltende Leistungselektronik auf einer beidseitig mit Kupfer beschichteten, wärmeleitenden Keramik angeordnet, welche auf der Wärmeaustauschfläche aufgelötet ist.

Solche Substrate bieten insbesondere eine schwingungsfeste Anordnung der Leistungselektronik im Kraftfahrzeug.

Vorteilhafterweise steuert die Leistungselektronik die Umschalteinrichtung zur Umsteuerung vom Kühlkreislauf auf den Heizungkurzschlußkreislauf und umgekehrt an.
Alternativ ist die Leistungselektronik mit dem Klimasteuergerät des Heiz-/Klimagerätes verbunden, wobei das Klimasteuergerät die Leistungselektronik zur Umschaltung des Kühlkreislaufes auf den Heizungskurzschlußkreislauf und umgekehrt ansteuert.

In einer Ausgestaltung steuert das Klimasteuergerät oder die Leistungselektronik den Elektromotor bedarfsabhängig auf Zuheizen an. Soll das Kältemittel in seiner ursprünglichen Bestimmung im Kältekreislauf zur Kühlung der Fahrzeuginnentemperatur genutzt werden, wird es vom Verdampfer über den Verdichter einem Verflüssiger und der Drossel wieder zurück zum Verdampfer geführt. Soll das Kältemittel aber als Zusatzheizung dienen, so wird das den Elektromotor und den Verdichter durchfließende Kältemittel direkt wieder dem Verdampfer zugeführt.

Nach Erkennung des Bedarfsfalls steuert das Klimasteuergerät die Umschalteinrichtung selbstätig an.

Um zu verhindern, daß die Motortemperatur oder die an der Leistungselektronik auftretende Temperatur einen kritischen Grenzwert überschreitet, ist jeweils ein Temperatursensor zur Überwachung dieser Temperaturen im Gehäuse integriert und mit dem Klimasteuergerät bzw. der Leistungselektronik verbunden, welches bei kritischen Situationen den Elektromotor und die Endstufen schützt.

In Auswertung der von den Temperatursensoren gelieferten Signale betreibt das Klimasteuergerät oder die Leistungselektronik durch Änderung einer Ansteuerfrequenz den Elektromotor in einem Betriebspunkt, in welchem eine hohe Verlustleistung erzeugbar ist. Zur Erhöhung der Heizleistung wird somit bewußt eine Verschlechterung des Wirkungsgrades des Motors eingestellt.

Darüber hinaus trägt die mechanische Verlustleistung der Antriebseinheit (z.B. Reibleistung der Lager, Verdichtungsleistung)trägt ebenfalls zur Temperaturerhöhung des Kühlmittels bei.

In einer einfachen Ausführung der Erfindung ist die Umschalteinrichtung als Ventil ausgestaltet.

Die Erfindung läßt zahlreiche Ausführungsbeispiele zu. Eines davon soll anhand der in den Zeichnungen dargestellten Figuren näher erläutert werden. Es zeigt:
- Figur 1: Anordnung des Heiz-/Klimagerätes im Kraftfahrzeug
- Figur 2: Kühlmittelkreislauf als Zusatzheizung
- Figur 3: erste Ausführungsform des mit einem Elektromotor angetriebenen Verdichters
- Figur 4: zweite Ausführungsform des mit einem Elektromotor angetriebenen Verdichters
- Figur 5: Anordnung der Motorsteuerelektronik am Gehäuse

Gleiche Merkmale sind mit gleichen Bezugszeichen gekennzeichnet.

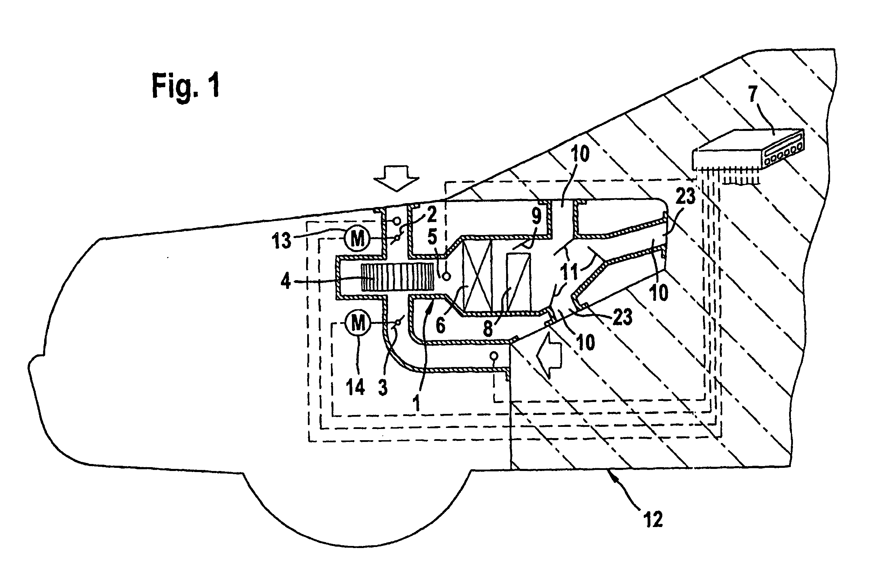

Gemäß Figur 1 ist das Klimagerät 1 in der konkreten Anordnung im Kraftfahrzeug 12 dargestellt. Über die Frischluftklappe 2, deren Stellung von einem Stellmotor 13 in Abhängigkeit von elektrischen Signalen gesteuert wird, die vom Klimasteuergerät 7 erzeugt werden, wird Frischluft aus der Umgebung des Kraftfahrzeuges in das Fahrzeug 12 angesaugt.

Die Umluft aus dem Fahrgastraum des Kraftfahrzeuges wird über die Umlaufklappe 3 vom Klimagerät 1 angesaugt. Auch die Stellung der Umluftklappe 3 wird in Abhängigkeit von elektrischen Signalen des Klimagerätes 7 von einem Stellmotor 13 gesteuert. Über den Ventilator 4 werden Um- und Frischluft in das Klimagerät gefördert, wodurch hinter dem Ventilator 4 Mischluft 5 entsteht, die dem Kältewärmetauscher 6 zugeführt wird.

Im Kühlbetrieb wird die Mischluft 5 über Ausströmer 10 in den Fahrgastraum abgegeben. Diese Ausströmer 10 sind in Kanälen 23 angeordnet, die in Richtung Windschutzscheibe, in Richtung Fahrer bzw. Beifahrer und in Richtung des Fußbereiches des Fahrers bzw. Beifahrers weisen. Mittels der in den einzelnen Kanälen 23 angeordneten Luftverteilerklappen 11 kann der Lufteintritt vom Fahrer bzw. Beifahrer reguliert werden.

An dem Kältewärmetauscher 6 schließt sich ein Heizwärmetauscher 8 an. Die vom Kältewärmetauscher 6 abgegebene Luftmenge wird mit Hilfe einer Temperaturklappe 9 am Heizwärmetauscher 8 vorbeigeführt und dabei erwärmt. Im Heizbetrieb strömt dann die entsprechend temperierte Mischluft in den Fahrgastraum.

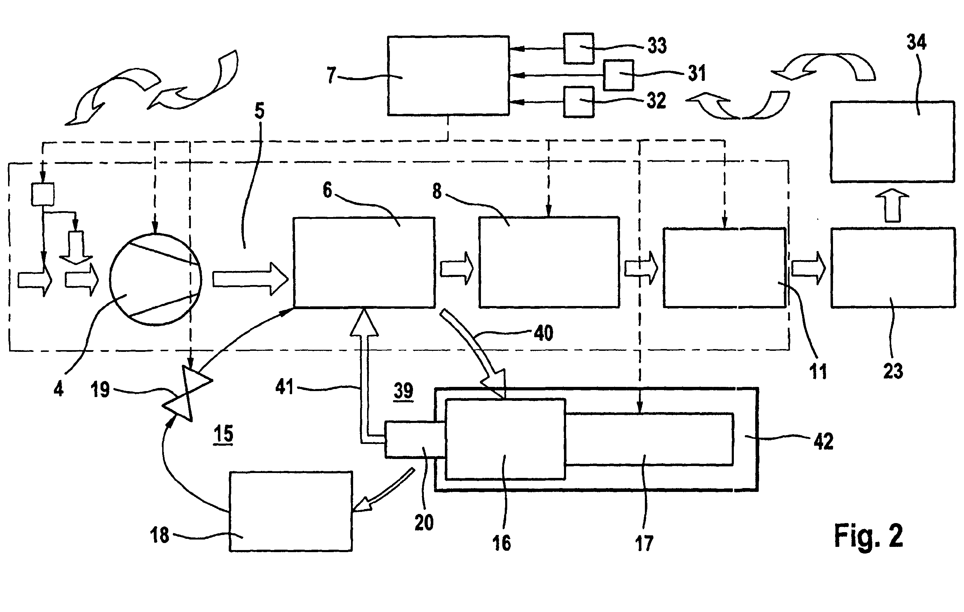

In Figur 2 ist der in einem solchen Klimagerät beschriebene Kühlkreislauf des Kraftfahrzeuges dargestellt. Wie bereits erläutert, wird die hinter dem Ventilator 4 anstehende Mischluft 5 dem Verdampfer 6 zugeführt. Dieser Verdampfer 6 wird mit Hilfe eines Kältemittelkreislaufes 15 im Kühlbetrieb des Heiz-/Klimagerätes 1 gekühlt, so daß die in den Fahrgastinnenraum austretende Luft die vom Fahrer gewünschte Temperatur enthält.

Die Kühlung des Verdampfers 6 erfolgt über ein Kältemittel, welches im Kältemittelkreislauf 15 in nur durch Pfeile angedeuteten Saug- und Druckleitungen umgewälzt wird.

Das Kältemittel verdampft im Verdampfer 6 und wird anschließend von dem Kompressor 16 angesaugt und verdichtet. Danach wird das Kältemittel in einem Kondensator 18 gekühlt und verflüssigt und anschließend wird das flüssige Kältemittel durch eine Expansionseinheit 19 entspannt und als Naßdampf dem Verdampfer 6 wieder zugeführt.

Der Kompressor 16 bildet mit einem drehzahlgeregelten Elektromotor 17 und der Motorsteuerelektronik 29 eine bauliche Einheit. Vorteilhafterweise sind der Kompressor 16 und der Elektromotor 17 gemeinsam in einem Metallgehäuse 24 angeordnet.

Zur Nutzung des mit dem Elektromotor 17 angetriebenen Kompressors 16 als Zusatzheizung ist ein Schaltventil 20 vorhanden, welches vom Klimasteuererät 7 angesteuert wird und das Kältemittel bei der Beanspruchung als Zusatzheizung in einem Kurzschlußkreis 39 vom Kompressor 16 über einen Rücklaufkanal 41 wieder auf den Verdampfer 6 leitet, wo die von dem Kältemittel aufgenommene Verlustleistung an die zu erwärmende Luft abgegeben wird. Das Schaltventil 20 ist vorteilhafterweise als Drehschieber ausgebildet. Alternativ kann als Schaltventil 20 aber auch ein 3/2 - Wegeventil verwendet werden.

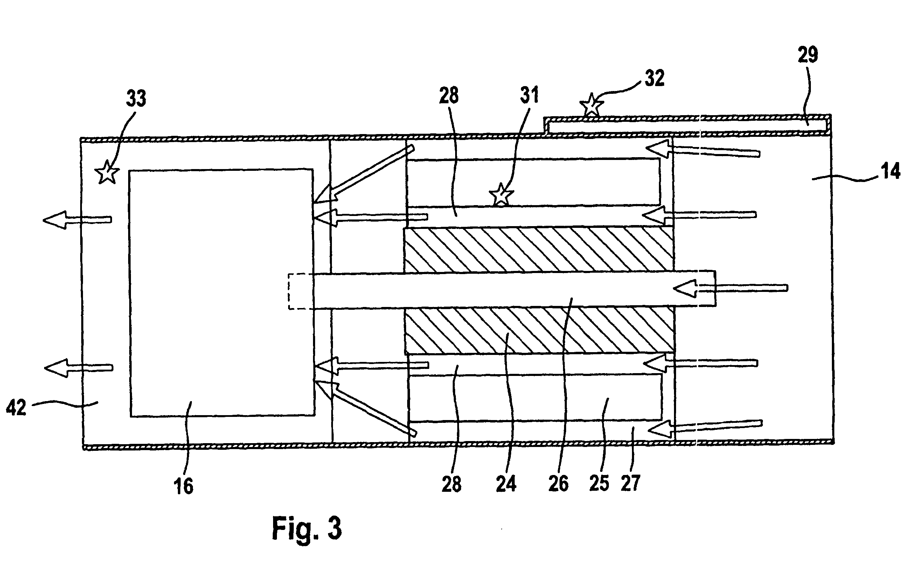

In Figur 3 ist eine bauliche Einheit von Kompressor 16, Elektromotor 17 und der Leistungselektronik 29 dargestellt. Der Elektromotor 17 besteht dabei aus einem Rotor 24, einem Stator 25 und einer Welle 26, die von einem Motorgehäuse 27 umschlossen sind. Das vom Verdampfer 6 kommende Kühlmittel durchströmt über Kanäle 28 den Spalt zwischen Rotor 24 und Stator 25. Die Welle 26 kann als Hohlwelle ausgeführt sein.
Diese Kanäle 28 sind außen am Gehäuse 27 des Motors 17 eingearbeitet sind. Sie können aber auch in das Motorgehäuse 27 selbst eingearbeitet sein, so daß das Kühlmittel, welches diesen Motor 17 umströmt, so nah wie möglich an den wärmeerzeugenden Teilen des Elektromotors 17 vorbeifließt.

Das Kältemittel fließt über einen Verbindungskanal 40 vom Verdampfer 6 kommend in den Innenraum 14 des Gehäuses 42, in welchem der Elektromotor 17 angeordnet ist und durchströmt die Kanäle 28. Auf diese Art und Weise wird die vom Elektromotor 17 abgegebene Verlustwärme durch das Kältemittel aufgenommen. Das so erwärmte Kältemittel tritt vom Gehäuseinnenraum in den Kompressor 16 ein, wo es entsprechend weiterbefördert wird.

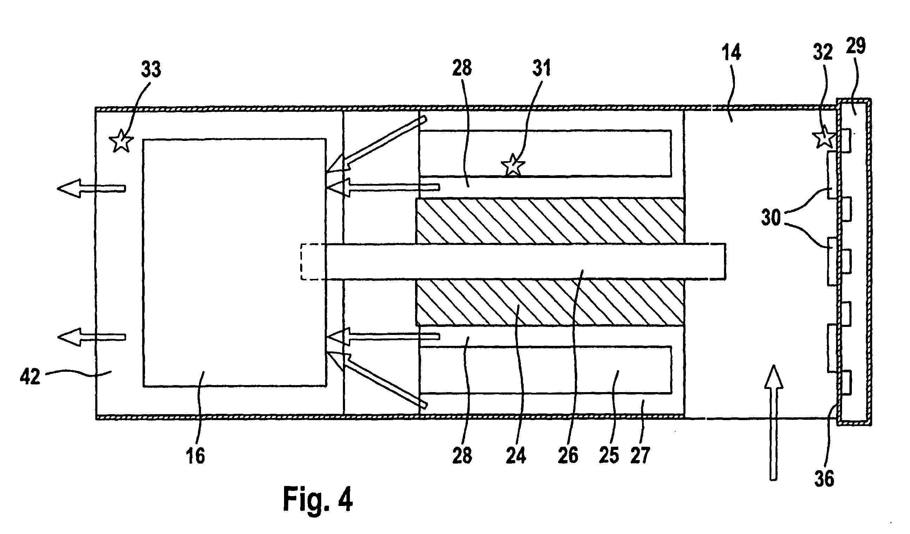

Die die Leistungsbauelemente 30 für den Elektromotor 17 enthaltende Elektronik 29 liegt dabei an der Außenwand des Behälters 42 auf. Es ist aber auch möglich, wie in Figur 4 dargestellt, daß die elektrisch isolierten Bauteile 30 sich innerhalb des Behälters 24 befinden. Dabei können die Leistungsbauelemente 30 auch in den Gehäuseinnenraum 14 hineinragen und direkt vom Kältemittel benetzt werden.

Zur Bestimmung der Temperatur des Elektromotors 17 bzw. der Leitstungshalbleiter 30 ist jeweils ein Temperatursensor 31, 32 vorgesehen, welcher mit dem Klimasteuergerät 7 oder der Leistungselektronik 29 verbunden sind. Die Temperatursensoren sind dabei üblicherweise als Thermistoren mit positiven oder negativen Temperaturkoeffizienten ausgebildet. Das Bediengerät 7 oder die Leistungselektronik 29 realisiert eine automatische Absteuerung, wenn eine maximal zulässige Temperatur an den Komponenten Elektromotor 17 bzw. Leistungselektronik erreicht ist.

Die Regelung der gewünschten Heizleistung erfolgt durch Erhöhung der elektrischen Verlustleistung und gezielte Einstellung des Volumenstromes des Kältemittels. Zu diesem Zweck wird der Kompressor 16 mittels des drehzahlgeregelten Elektromotor 17 entsprechend eingestellt. Die Drehzahlregelung wird von dem Klimasteuergerät 7 durchgeführt. Dazu steuert das Klimasteuergerät 7 den Elektromotor 17 mit einem entsprechenden pulsweitenmodulierten Spannungssignal an. Eine Variation der Pulsweite des Ansteuersignals ermöglicht einfach eine unterschiedliche Leistung und somit Wärmeerzeugung des Elektromotors.

So ist beispielsweise ein schnelleres Aufheizen durch eine Erhöhung der Ansteuerfrequenz des Elektromotors 17 möglich, um den Elektromotor 17 zu einer erhöhten Wärmeabgabe zu veranlassen.

Die Nutzung der Zusatzheizung führt zu einer Verkürzung der Kaltstartphase des Verbrennungsmotors.

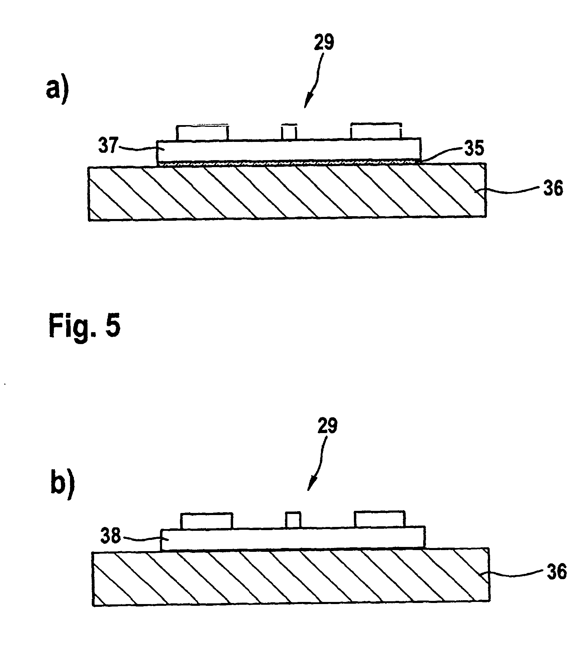

In Figur 5 sind zwei Varianten zur Anordnung der Leistungselektronik 29 an der Gehäusewandung 36 des Behälters 42 dargestellt. Gemäß Figur a) sind die elektrischen Bauelemente in Dickschichttechnik auf einem Keramiksubstrat 37 angeordnet, welches flächig auf der Gehäusewand 36 mittels eines Wärmeleitklebers 35 befestigt ist.
In Figur b) sind auf einem gut wärmeleitenden Keramiksubstrat 38 Kupferbleche als Leitbahnen aufgeschweist, an welchen die elektrischen Bauelemente verlötet sind. Auch hier ist das Substrat 38 zur guten Wärmekopplung mit der Gehäusewandung 36 flächig auf dieser aufgelötet

## Patentansprüche

1. Zusatzheizung für ein Kraftfahrzeug mit einem Heiz/Klimagerät (1) des Kraftfahrzeuges, welches einen von einem Elektromotor (17) angetriebenen Verdichter (16) aufweist, der in einem, einen kältemittelführenden Kältekreislauf (18) angeordnet ist, wobei der Verdichter (16) eine Umschalteinrichtung (20) zur Umschaltung von dem Kältekreislauf (18) auf einen Heizungskurzschlusskreis (39) und zurück aufweist, wobei der Heizungskurzschlusskreis (39) das den Elektromotor (17) und/oder mindestens die Leistungsbauelemente (30) einer den Elektromotor (17) ansteuernden Leistungselektronik (29) zumindest teilweise umschließendes Kältemittel zur Abgabe der aufgenommenen, durch die Verlustleistung des Elektromotors (17) und/oder der Leistungsbauelemente (30) erzeugten Wärme an den Fahrzeuginnenraum (34) umlenkt, **dadurch gekennzeichnet, dass** der Heizungskurzschlusskreis (39) einen Zuführkanal (40) aufweist, welcher das Kühlmittel von einem Verdampfer (6) zu einem den Elektromotor (17) und den Verdichter (16) enthaltenden Gehäuse (42) transportiert, wobei die am Gehäuse (42) angeordnete Umschalteinrichtung (20) über einen Rückführkanal (41) mit dem Verdampfer (6) verbunden ist.

2. Vorrichtung nach Anspruch 1, **dadurch gekennzeichnet, daß** der Elektromotor (17) und der Verdichter (16) in dem die Leistungselektronik (29) tragenden Gehäuse (42) angeordnet sind, wobei das aus dem Verdampfer (6) austretende Kältemittel vor Eintritt in den Verdichter (16) den Elektromotor (17) und/oder mindestens die Leistungsbauelemente (30) der Leistungselektronik (29) umfließt.

3. Vorrichtung nach Anspruch 2, **dadurch gekennzeichnet, daß** der Elektromotor (17) von dem Kältemittel allseitig umflossen ist.

4. Vorrichtung nach Anspruch 3, **dadurch gekennzeichnet, daß** die Leistungsbauelemente (30) in einem engen thermischen Kontakt zum Kältemittel angeordnet sind.

5. Vorrichtung nach Anspruch 3 und 4, **dadurch gekennzeichnet**, die Leistungselektronik (30) im oder auf dem Gehäuse (42) angeordnet ist.

6. Vorrichtung nach Anspruch 4, **dadurch gekennzeichnet, daß** die Leistungsbauelemente (30) mittels einer von dem Kältemittel benetzten Wärmeaustauschfläche (36) kühlbar ausgeführt sind.

7. Vorrichtung nach Anspruch 6, **dadurch gekennzeichnet, daß** die Wärmeaustauschfläche (36) eine Vielzahl von Kanälen (28) aufweist, die vom Kältemittel durchflossen sind.

8. Vorrichtung nach Anspruch 1, 5 und 6 **dadurch gekennzeichnet, daß** die die Leistungsbauelemente (30) beinhaltende Leistungselektronik (29) auf einem Dickschichtkeramiksubstrat (37) angeordnet ist, welches auf der Oberfläche (36) des Behälters (42) aufgeklebt ist.

9. Vorrichtung nach Anspruch 8, **dadurch gekennzeichnet, daß** die die Leistungsbauelemente (30) beinhaltende Leistungselektronik (29) auf einer beidseitig mit Kupfer versehenen, wärmeleitenden Keramik (38) angeordnet ist, welche auf der Wärmeaustauschfläche (36) aufsitzt.

10. Vorrichtung nach Anspruch 1, **dadurch gekennzeichnet, daß** die Leistungselektronik (29) die Umschalteinrichtung (20) zur Umsteuerung des Kühlkreislaufes (18) auf den Heizungskurzschlußkreis (39) und umgekehrt ansteuert.

11. Vorrichtung nach Anspruch 10, **dadurch gekennzeichnet, daß** die Leistungselektronik (29) mit dem Klimasteuergerät (7) des Heiz-/Klimagerätes (1) verbunden ist, wobei das Klimasteuergerät (7) die Leistungselektronik (30) zur Umschaltung des Kühlkreislaufes (18) auf den Heizungskurzschlußkreis (39) und umgekehrt ansteuert.

12. Vorrichtung nach Anspruch 10 oder 11, **dadurch gekennzeichnet, daß** das Klimasteuergerät (7) oder die Leistungselektronik (29) den Elektromotor (17) bedarfsabhängig auf Zuheizen ansteuert.

13. Vorrichtung nach Anspruch 10, **dadurch gekennzeichnet, dass** das Klimasteuergerät (7) nach Erkennung des Heizungsfalls die Umschalteinrichtung (20) selbstätig ansteuert.

14. Vorrichtung nach Anspruch 13, **dadurch gekennzeichnet, daß** ein Temperatursensor (31) zur Überwachung der Temperatur des Elektromotors (17) und ein Temperatursensor (32) zur Überwachung der Temperatur der Leistungselektronik (29) im Gehäuse (42) integriert und mit dem Klimasteuergerät (7) verbunden sind.

15. Vorrichtung nach Anspruch 14, **dadurch gekennzeichnet, dass** in Auswertung der von den Temperatursensoren (31, 32) gelieferten Signale das Klimasteuergerät (7) oder die Leistungselektronik (30) durch Veränderung einer Ansteuerfrequenz den Elektromotor (17) in einem Betriebspunkt betreibt, in welchem eine hohe Verlustleistung erzeugbar ist.

16. Vorrichtung nach Anspruch 1, **dadurch gekennzeichnet, dass** die Umschalteinrichtung (20) als Ventil ausgebildet ist.

## Claims

1. Additional heating system for a motor vehicle having a heating/air-conditioning unit (1) of the motor vehicle which has a compressor (16), which is driven by an electric motor (17) and is arranged in a refrigerating circuit (18) carrying a refrigerant, the compressor (16) having a switching device (20) for switching from the refrigerating circuit (18) to a heating bypass (39) and back again, the heating bypass (39) diverting the refrigerant that flows at least partially around the electric motor (17) and/or at least the power components (30) of power electronics (29) controlling the electric motor (17) so as to release the absorbed heat generated by the power dissipation of the electric motor (17) and/or the power components (30) to the interior (34) of the vehicle, **characterized in that** the heating bypass (39) has a feed duct (40) which carries the refrigerant from an evaporator (6) to a housing (42) containing the electric motor (17) and the compressor (16), the switching device (20) arranged on the housing (42) being connected to the evaporator (6) by a return duct (41).

2. Device according to Claim 1, **characterized in that** the electric motor (17) and the compressor (16) are arranged in the housing (42) carrying the power electronics (29), the refrigerant emerging from the evaporator (6) flowing around the electric motor (17) and/or at least the power components (30) of the power electronics (29) before entering the compressor (16).

3. Device according to Claim 2, **characterized in that** the refrigerant flows around the electric motor (17) on all sides.

4. Device according to Claim 3, **characterized in that** the power components (30) are arranged in close thermal contact with the refrigerant.

5. Device according to Claim 3 and 4, **characterized in that** the power electronics (30) are arranged in or on the housing (42).

6. Device according to Claim 4, **characterized in that** the power components (30) are constructed in such a way that they can be cooled by means of a heat exchange surface (36) wetted by the refrigerant.

7. Device according to Claim 6, **characterized in that** the heat exchange surface (36) has a multiplicity of ducts (28), through which the refrigerant flows.

8. Device according to Claims 1, 5 and 6, **characterized in that** the power electronics (29) containing the power components (30) are arranged on a thick-film ceramic substrate (37) which is bonded onto the surface (36) of the container (42).

9. Device according to Claim 8, **characterized in that** the power electronics (29) containing the power components (30) are arranged on thermally conductive ceramic (38) which is provided on both sides with copper and is seated on the heat exchange surface (36).

10. Device according to Claim 1, **characterized in that** the power electronics (29) drive the switching device (20) to switch the refrigerating circuit (18) over to the heating bypass (39) and vice versa.

11. Device according to Claim 10, **characterized in that** the power electronics (29) are connected to the air-conditioning control unit (7) of the heating/air-conditioning unit (1), the air-conditioning control unit (7) driving the power electronics (30) to switch the refrigerating circuit (18) over to the heating bypass (39) and vice versa.

12. Device according to Claim 10 or 11, **characterized in that** the air-conditioning control unit (7) or the power electronics (29) control(s) the electric motor (17) for additional heating as required.

13. Device according to Claim 10, **characterized in that** the air-conditioning control unit (7) drives the switching device (20) automatically after detecting the heating situation.

14. Device according to Claim 13, **characterized in that** a temperature sensor (31) for monitoring the temperature of the electric motor (17) and a temperature sensor (32) for monitoring the temperature of the power electronics (29) are integrated into the housing (42) and connected to the air-conditioning control unit (7).

15. Device according to Claim 14, **characterized in that**, on the basis of evaluation of the signals supplied by the temperature sensors (31, 32), the air-conditioning control unit (7) or the power electronics (30) changes or change a control frequency so as to operate the electric motor (17) at an operating point at which a high level of power dissipation can be produced.

16. Device according to Claim 1, **characterized in that** the switching device (20) is designed as a valve.

## Revendications

1. Chauffage d'appoint pour un véhicule automobile, avec un appareil de chauffage et climatisation (1) du véhicule automobile, qui comporte un compresseur (16) entraîné par un moteur électrique (17) et monté dans un circuit (18) où circule un produit réfrigérant, le compresseur (16) comportant un dispositif d'inversion (20) permettant de commuter d'un circuit de refroidissement (18) sur un circuit de chauffage par dérivation (39) et vice-versa, où le circuit de chauffage par dérivation (39) fait dévier le produit réfrigérant entourant au moins partiellement le moteur électrique (17) et / ou au moins les composants de puissance (30) d'une électronique de puissance (29) commandant le moteur électrique (17) pour qu'il délivre à l'habitacle (34) du véhicule la chaleur produite par la puissance dissipée du moteur électrique (17) et / ou des composants de puissance (30), **caractérisé par le fait que** le circuit de chauffage par dérivation (39) a un canal d'alimentation (40), qui transporte le produit réfrigérant d'un évaporateur (6) vers un boîtier (42) renfermant le moteur électrique (17) et le compresseur (16), le dispositif d'inversion (20) monté sur le boîtier (42) étant relié, par l'intermédiaire d'un canal de retour (41) à l'évaporateur (6).

2. Système selon la revendication 1 **caractérisé par le fait que** le moteur électrique (17) et le compresseur (16) sont disposés dans le boîtier (42) portant l'électronique de puissance (29), le produit réfrigérant sortant de l'évaporateur (6) baignant, avant d'entrer dans le compresseur (16), le moteur électrique (17) et / ou au moins les composants de puissance (30) de l'électronique de puissance (29).

3. Système selon la revendication 2 **caractérisé par le fait que** le moteur électrique (17) est baigné de tous les côtés par le produit réfrigérant.

4. Système selon la revendication 3 **caractérisé par le fait que** les composants de puissance (30) sont disposés en contact thermique étroit avec le produit réfrigérant.

5. Système selon la revendication 3 et 4 **caractérisé par le fait que** l'électronique de puissance (30) est disposée dans ou sur le boîtier (42).

6. Système selon la revendication 4 **caractérisé par le fait que** les composants de puissance (30) sont exécutés de telle sorte qu'ils peuvent être refroidis au moyen d'une surface de transfert thermique (36) humidifiée par le produit réfrigérant.

7. Système selon la revendication 6 **caractérisé par le fait que** la surface de transfert thermique (36) comporte une pluralité de canaux (28) traversés par le produit réfrigérant.

8. Système selon la revendication 1, 5 et 6 **caractérisé par le fait que** l'électronique de puissance (29) renfermant les composants de puissance (30) est disposée sur un substrat (37) en céramique à couches épaisses collé sur la surface (36) du boîtier (42).

9. Système selon la revendication 8 **caractérisé par le fait que** l'électronique de puissance (29) renfermant les composants de puissance (30) est disposée sur une céramique (38) à conduction thermique dotée de cuivre sur ses deux côtés et appliquée sur la surface de transfert thermique (36).

10. Système selon la revendication 1 **caractérisé par le fait que** l'électronique de puissance (30) commande le dispositif d'inversion (20) permettant de commuter du circuit de refroidissement (18) sur le circuit de chauffage par dérivation (39) et vice-versa.

11. Système selon la revendication 10 **caractérisé par le fait que** l'électronique de puissance (29) est reliée à l'appareil de commande (7) de l'appareil de chauffage et de climatisation (1), l'appareil de commande de la climatisation (7) commandant l'électronique de puissance (29) pour la commutation du circuit de refroidissement (18) sur le circuit de chauffage par dérivation (39) et vice-versa.

12. Système selon la revendication 10 ou 11 **caractérisé par le fait que** l'appareil de commande de la climatisation (7) ou l'électronique de puissance (29) excite, en fonction du besoin, le moteur électrique (17) sur le chauffage d'appoint.

13. Système selon la revendication 10 **caractérisé par le fait que** l'appareil de commande de la climatisation (7) excite automatiquement, une fois que le besoin de chauffage est reconnu, le dispositif d'inversion (20).

14. Système selon la revendication 13 **caractérisé par le fait qu**'un capteur de température (31) est intégré dans le boîtier (42) pour le contrôle de la température du moteur électrique (17) et qu'un capteur de température (32) est intégré dans le boîtier (42) pour le contrôle de la température de l'électronique de puissance (29) et qu'ils sont reliés à l'appareil de commande de la climatisation (7).

15. Système selon la revendication 14 **caractérisé par le fait que,** à la suite de l'analyse des signaux délivrés par les capteurs de température (31, 32), l'appareil de commande de la climatisation (7) ou l'électronique de puissance (30) entraînent, par une modification de la fréquence d'excitation, le moteur électrique (17) sur un point de fonctionnement dans lequel il est possible de produire une puissance dissipée élevée.

16. Système selon la revendication 1 **caractérisé par le fait que** le dispositif d'inversion (20) est conçu sous la forme d'une soupape.
